# EUROPEAN PATENT APPLICATION

(11) **EP 2 078 904 A2**
(43) Date of publication of application: **15.07.2009**
(21) Application number: 08468005.7
(22) Date of filing: 03.10.2008
(51) Int. Cl.: F24J 2/24

(54) **Solar collector with an absorption tube**

(30) Priority: 16.10.2007 SI 200700260
(71) Applicant: Jerebus d.o.o., 4000 Kranj (SI)
(72) Inventor: Munih, Pavel, 4000 Kranj (SI); Jereb, Janez, 4000 Kranj (SI)

(57) **Abstract**

Solar collector with an absorption tube, made from a lowest protection layer **(1)** onto witch a thermal isolation plate is glued **(2),** from central circular blind thermal plate **(3'),** and from the frame blind isolation plates **(3"),** from the in spiral form wound black polymeric absorption tube **(4),** which enters **(4')** the collector trough a groove in the lower thermal isolation plate **(2),** mounts around the central blind isolation plate **(3')** on the surface of polystyrene isolation plate **(2),** where it is in one piece spirally rolled to the outer rim **(4")** of the collector, where leaves the collector and upper transparent, mechanical and thermal protection acrylic plate **(5).** In this way composed collector is finished by metal borders **(7)** on collector frame, adopted for different types of mounting on roofs or roof constructions. Completed composite collector could be additionally reinforced with strengthening screws **(8)** through the isolation blind plates. Following circular or oval central blind isolation plate **(3')** the solar collectors are in combination with different blind isolation plates on the collector frame **(3")** of different outer geometrical shapes.

## Description

### Background of Invention

The invention is a composite solar collector with a spirally wound black polymer, preferably an elastomeric absorption tube for conversion of solar energy into thermal energy of heating fluid, conveying heat to the heat exchanger. The invention's prime purpose is heating the sanitary water, but it could also be used to heat accumulated water in combination with other systems, such as electric, fossil, biomass, oil and gas heaters. Especially with a heat pump, it enables a rational and ecological heating of sanitary systems and living quarters.

### Technical Problems

The technical problem being solved by the invention is how to build a solar collector in a technically simple and economical way. Collector has to operate in the temperature region below the boiling point of water and to absorb solar energy from a wide incidence angle and at a low solar intensity. The collector has to be aesthetically pleasing and suitable for mounting on different types of buildings.

### Existing Technical Knowledge

There are many existing solutions in the field of heating the sanitary water and living quarters that heat water up to adequately high temperature under favourable solar conditions. Those solutions possess the following characteristics: the bottom layer consists of mechanical protection with an upper thermal isolation, the middle layer is a metal absorption tube welded onto a metal plate or a hollow metal plate with the heating fluid, and the top layer is a light transmitting plate acting also as mechanical protection and thermal isolation. For increasing efficiency of solar energy absorption, the metal plates are often covered with a special absorption coating. The characteristics of such systems is relatively small quantity of heating fluid in the absorption part, which results in a short start up time and after the reached temperature equilibrium a long shut down time. Malfunction of such system is represented also in overheating of the heating fluid, especially in the summer time, or in periods of low energy consumption from that system.

The low temperature heating system solutions as outdoor swimming pools, etc., are the absorbers made mostly of various polymeric and/or elastomeric materials customised as rolls of black tubes or interconnected tube or plate collectors, mounted on more or less convenient places. Into this category falls also the collector made from plastic tube rolled into a spiral form and fixed onto a firm circular base with radial rods, as described in patents US 401314 and US 4172441 from 29.3.1977 and 30.10.1979, respectively.

There is a need for a new technical solution on solar collectors, combining all technical advantages of high and low temperature collectors, with high absorption and heat transfer efficiency, working in an acceptable temperature region under the boiling point of water, being highly efficient in a wide incidence angle and at a low solar intensity, aesthetically pleasing and suitable for mounting on different types of buildings.

### Technical Solution

The problem is solved with a new solar collector construction where a black polymer tube enters the system through the thermal isolation of the bottom layer, runs to the centre of the collector where it mounts to the surface of isolation sheet and then, spirally rolled on the surface all the way to the outer rim, leaves the collector. Onto central blind part of collector and also on blind parts close to the rim are added additional isolation layers, equal or higher as diameter of the polymer tube, preferably higher, enabling air distance between spiral polymeric absorber and transparent protection sheet, which lays on all fulfilled blind surfaces. Collector after description is finalised with a metal frame, depending on selected mounting system, with possible additional construction strengthening with screws through the blind parts.

The invention will be explained more precisely with the following experimental example and additional pictures.

Pic.1 Ground-plan of experimental example

Pic.2 Cross section of experimental example

### Experimental Example

The experimental example of the solar collector, shown in Pic.1 and Pic.2, is composed of the lowest layer made out of 1 mm thick aluminium protected plate **(1)** and the thermal isolation sheet is a polystyrene plate **(2),** fixed on aluminium plate **(1)** by silicon putty **(6)** which ensures the required base integrity. In the centre of the collector base, the central blind circle of 25 mm polystyrene plate **(3')** is glued in same way by silicon putty **(6').** In the polystyrene plate **(2),** from the rim to the central plate **(3),** there is a groove for installment of the black elastomeric tube **(4')** with inner diameter of 15 mm and wall thickness of 2,5 mm. The tube runs from the rim to the central plate **(3'),** mounting to the surface of polystyrene isolation plate **(2),** where the absorption tube **(4)** rolls in a spiral form wound all the way to the rim, where it leaves the collector **(4").** The outer non-absorption areas at the rim **(3")** are also filled with polystyrene plates up to the height of the central blind plate. The spirally rolled elastomeric tube is on the upper side additionally connected with ribbons of transparent silicon putty **(6")** that increases strengthening of the tube, meaning an additional support for the upper 3 mm thick transparent acrylic plate **(5).** In this way, the composed collector is finished by metal borders **(7)** on the collector frame, adopted for different types of mounting on roofs or roof constructions, with possible additional construction strengthening with screws **(8)** through the blind plates.

The collector described above is in current test production with a surface area of 1800 mm x 1800 mm and over 100 m of spirally rolled black elastomeric absorption tube, which heated the heating fluid up to 70 °C even in the autumn sunny days. Due too semicircular absorption tube area, the collector is very efficient even at sunsets.

In the absorption part of the collector there is more than 20 litres of heating fluid, which is more than two thirds of all the heating fluid in the system, and the invention enables a greater flow of heat from of the collector to the heat exchanger, where the temperature difference between inlet and outlet of heating fluid depends on flow speed.

In the case of multiple collectors, the latter are to be connected successively. This increases the amount of active part of heating fluid in the circulation system, enabling increased flow speed and consequently the amount of transferred heat. A greater temperature difference between the inlet and outlet heating fluid leads to higher temperatures in the heat exchanger.

The solar collector after invention is energetically efficient, simply feasible, watertight, without condensate under the upper acrylic plate, elastically expansible in the absorption part, so that there is no expansion tank needed in the solar system, relatively thin, aesthetically pleasant and price competitive.

The solar collectors after the invention may be combined with various central and frame blind polystyrene plates of different final forms, the central plates being circular or oval.

The basic characteristics of the solar collector after invention, but not all the details and possible versions, are listed under patent requirements.

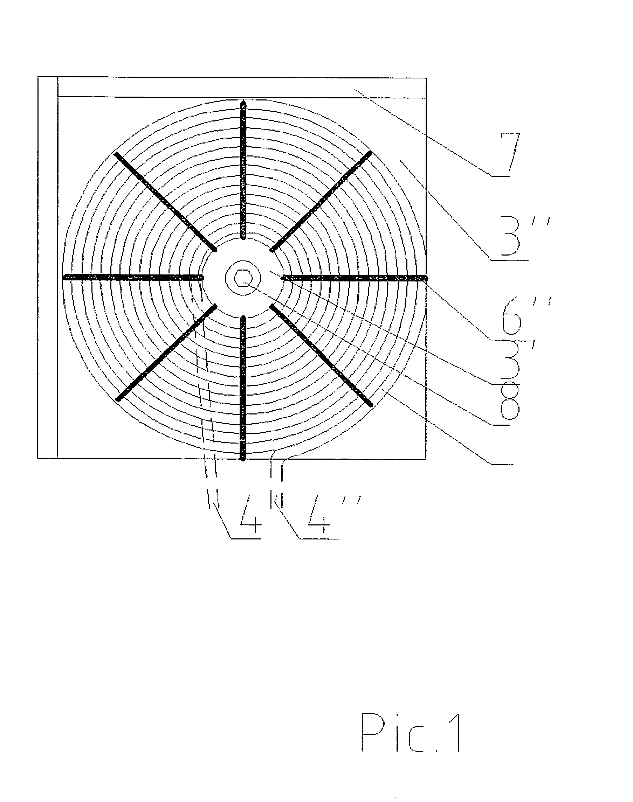

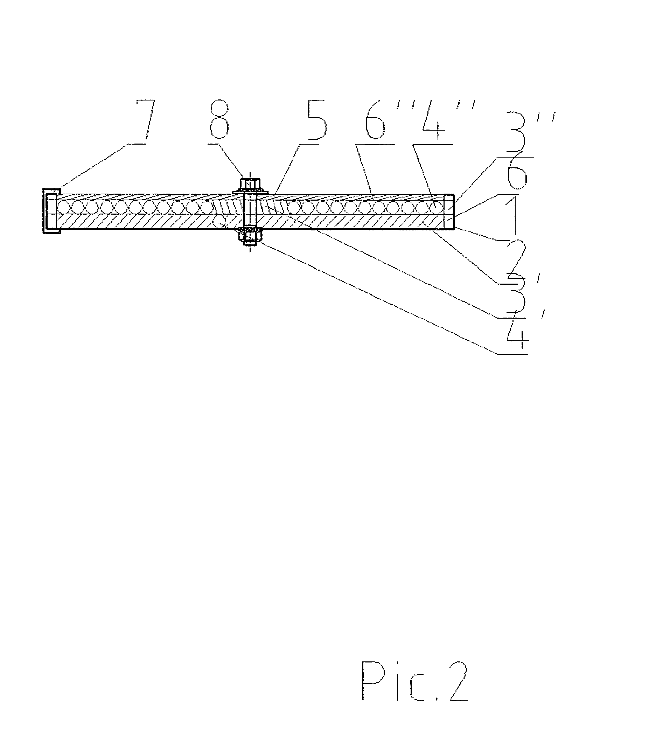

## Claims

1. Solar collector with an absorption tube, made from the lowest protection layer **(1)** onto which a thermal isolation plate is glued **(2),** from central circular blind thermal plate **(3'),** from the frame blind isolation plates **(3"),** from the in spiral form wound black polymeric absorption tube **(4),** and from the upper transparent, mechanical and thermal protection acrylic plate **(5), denoted by:** the lowest protection layer **(1)** is as thin as possible not corrosive material, preferably aluminium plate; a thermal isolation plate **(2),** central circular blind thermal plate **(3')** and the frame blind isolation plates **(3")** from light and thermal resistant isolation material, preferably polystyrene; spiral form wound black polymeric absorption tube **(4),** preferably black cross linked elastomeric tube; upper transparent, mechanical and thermal protection preferably acrylic plate **(5),** and by convenient metal borders **(7)** on collector frame and strengthening screws **(8)** through the blind plates.

2. Solar collector as described under section 1, **denoted by:** in one piece spiral form wound black polymeric absorption tube **(4)** from saturated and cross linked thermoplastic or elastomeric material, preferably from cross linked elastomeric material, as for instance EPDM, silicon, preferably EPDM, resistant to the whole spectrum of solar radiation, ozone and high temperatures.

3. Solar collector as described under section 1, **denoted by:** the polymeric absorption tube **(4')** entering the collector in a groove in the lower thermal isolation plate **(2),** mounts around the central blind isolation plate **(3')** to the surface of polystyrene isolation plate **(2),** where it is in one piece spirally rolled to the outer rim of the collector where it leaves the collector.

4. Solar collector as described under section 1, **denoted by:** the different layers being glued together by self reactive elastic silicon putty **(6), (6')** and **(6"),** preferably transparent silicon putty.

5. Solar collector as described under section 1, **denoted by:** the upper transparent, mechanical and thermal isolation acrylic plate **(5)** lies on blind isolation plates **(3')** and **(3"),** equal or higher than outside diameter of absorption tube **(4),** preferably higher, and radial ribbons, preferably of transparent silicon putty **(6").**

6. Solar collector as described under section 1, **denoted by:** the metal borders **(7)** on collector frame are adopted for different types of mounting on roofs or roof constructions, where the collector is possibly reinforced with strengthening screws **(8)** trough the blind isolation plates **(3')** and **(3").**

7. Solar collector as described under section 1, **denoted by:** the collectors could be combined with different blind isolation plates on the collector frame **(3")** of different outer geometrical shapes following circulate or oval central blind isolation plate **(3'),** preferably circulate.
